# EUROPÄISCHE PATENTSCHRIFT

(11) **EP 1 475 260 B1**
(45) Veröffentlichungstag und Bekanntmachung des Hinweises auf die Patenterteilung: **19.07.2006**
(21) Anmeldenummer: 04010823.5
(22) Anmeldetag: 06.05.2004
(51) Int. Cl.: B60H 1/22, B60H 1/00

(54) **Heizsystem für ein Fahrzeug**
Heating system for a vehicle
Système de chauffage pour véhicule

(30) Priorität: 07.05.2003 DE 10320340
(43) Veröffentlichungstag der Anmeldung: 10.11.2004
(73) Patentinhaber: J. Eberspächer GmbH & Co. KG, 73730 Esslingen (DE)
(72) Erfinder: Schlecht, Patric, 73760 Ostfildern (DE); Kohle, Uwe, 73779 Deizisau (DE); Sauter, Oliver, 73770 Denkendorf (DE)
(74) Vertreter: Ruttensperger, Bernhard

(56) Entgegenhaltungen:
- EP-A- 0 023 052
- DE-A- 4 115 141
- DE-A- 10 110 558
- PATENT ABSTRACTS OF JAPAN Bd. 0102, Nr. 11 (M-501), 24. Juli 1986 (1986-07-24) -& JP 61 050822 A (NISSAN MOTOR CO LTD), 13. März 1986 (1986-03-13)

## Beschreibung

Die vorliegende Erfindung betrifft ein Heizsystem für ein Fahrzeug umfassend ein Heizluftgebläse zur Erzeugung eines in einen Fahrzeuginnenraum einzuleitenden Heizluftstroms, ein Heizgerät mit einer Wärmetauscheranordnung zur Erwärmung des durch das Heizluftgebläse geförderten Heizluftstroms und eine Mischeranordnung zur Einstellung eines Außenluft/Umluft-Verhältnisses der der Wärmetauscheranordnung zuzuführenden Luft.

Derartige Heizsysteme werden in Fahrzeugen eingesetzt, um beispielsweise in einem Standheizungsmodus oder aber auch einem Zuheizmodus den Innenraum eines Fahrzeugs auf gewünschte Temperaturen zu bringen. Die Temperatur, auf welche der Fahrzeuginnenraum vorgeheizt werden soll, kann beispielsweise von einem Benutzer des Fahrzeugs vorgegeben werden, so dass z.B. im Winter einerseits bei Fahrtantritt angenehme Temperaturen im Fahrzeuginnenraum vorherrschen, andererseits die Scheiben bereits abgetaut sind und somit größtmögliche Sicherheit geboten wird.

DE 101 10 558 A offenbart ein Heizsystem nach dem Oberbegriff der Ansprüche 1 und 3, EP 0 023 052 A nach dem der Ansprüche 1,3 und 5.

Es ist die Aufgabe der vorliegenden Erfindung, ein Heizsystem für ein Fahrzeug vorzusehen, mit welchem der für den Benutzer eines Fahrzeugs erreichbare Komfort weiter verbessert werden kann.

Gemäß einem ersten Aspekt der vorliegenden Erfindung wird diese Aufgabe gelöst durch ein Heizsystem für ein Fahrzeug nach Anspruch 1.

Durch das Berücksichtigen der Außentemperatur, also der im Bereich der Umgebung des Fahrzeugs vorherrschenden Temperatur, bei der Einstellung des Außenluf/Umluft-Verhältnisses, kann sichergestellt werden, dass durch ausreichendes Beimischen von Außenluft, d.h. Frischluft, zu der aus dem Fahrzeuginnenraum abgezogenenen und wieder zu erwärmenden Luft ein ein größtmöglicher Frischluftanteil für einen hohen Sauerstoffgehalt im Fahrzeuginnenraum sorgt, und dass die Gefahr des Beschlagens der Scheiben mit Feuchtigkeit gemindert ist.

Dabei ist es insbesondere vorteilhaft, wenn die Ansteueranordnung die Mischeranordnung derart ansteuert, dass bei geringerer Außentemperatur das Außenluft/Umluft-Verhältnis geringer ist.

Gemäß einem weiteren Aspekt der vorliegenden Erfindung wird die eingangs genannte Aufgabe gelöst durch ein Heizsystem für ein Fahrzeug nach Anspruch 3.

Auch bei Heranziehung der Fahrzeuginnenraumtemperatur als Ansteuergrundlage für die Mischeranordnung kann dafür gesorgt werden, dass unter Berücksichtigung der Erlangung bzw. der schnellstmöglichen Erlangung der gewünschten Temperatur der Außenluft- bzw. Frischluftanteil so groß als möglich gehalten werden kann.

Auch hier ist es wieder vorteilhaft, wenn die Ansteueranordnung die Mischeranordnung derart ansteuert, dass bei geringerer Innenraumtemperatur das Außenluft/Umluft-Verhältnis geringer ist.

Gemäß einem weiteren Aspekt der vorliegenden Erfindung wird die eingangs genannte Aufgabe gelöst durch ein Heizsystem nach Anspruch 5.

Auch die Differenz zwischen Innenraumsolltemperatur und Innenraumtemperatur zur Vorgabe des Anteils an zuzumischender Außenluft ermöglicht es, bei geeignetem Erwärmungsverhalten den Anteil an Außenluft bzw. Frischluft zu vergrößern.

Das erfindungsgemäße System kann weiter derart ausgebildet sein, dass die Ansteueranordnung dazu ausgebildet ist, die Förderleistung des Heizluftgebläses beruhend auf einer Ausgabe einer Fahrzeuginnenraumtemperatursensoranordnung und der durch eine Fahrzeuginnenraumsolltemperaturvorgabeanordnung vorgegebenen Innenraumsolltemperatur einzustellen.

Weiter ist es möglich, dass die Ansteueranordnung ein erstes Ansteuergerät zur Ansteuerung des Heizluftgebläses und der Mischeranordnung umfasst sowie ein zweites Ansteuergerät zur Ansteuerung des Heizgeräts umfasst, wobei das erste Ansteuergerät die Ausgabe einer Außenraumtemperatursensoranordnung oder/und einer Fahrzeuginnenraumtemperatursensoranordnung oder/und einer Fahrzeuginnenraumsolltemperaturvorgabeanordnung als Eingangsgrößen aufweist.

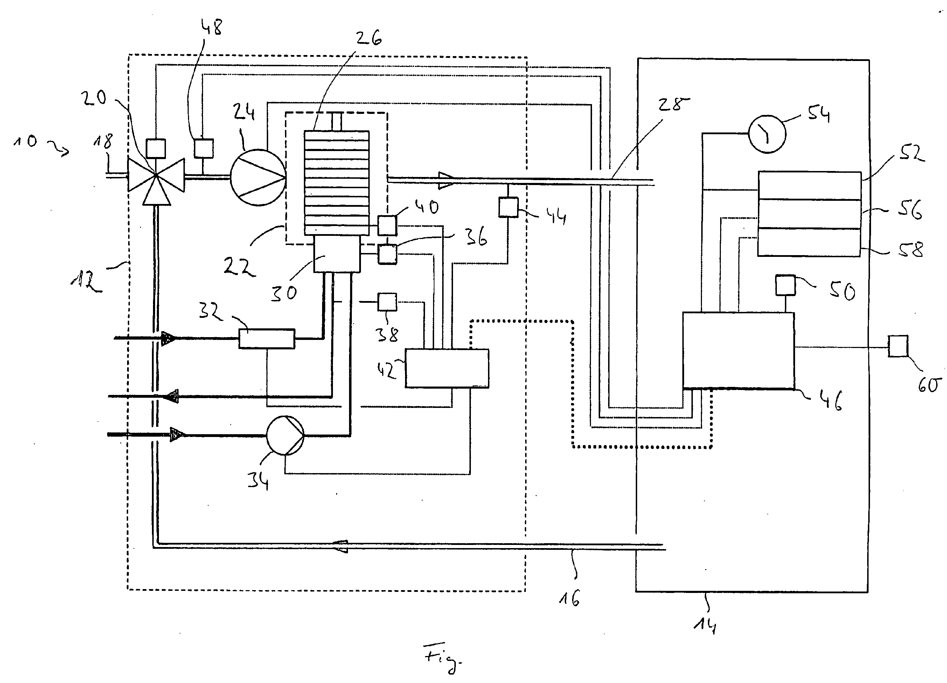

Die vorliegende Erfindung wird nachfolgend mit Bezug auf die beiliegende Figur detailliert beschrieben, welche ein erfindungsgemäßes Heizsystem in prinzipeller Hinsicht darstellt.

Das in der Figur dargestellte Heizsystem 10 umfasst als wesentlichen Bestandteil ein mit Strichlinie umgebenes Temperiermodul 12. Dieses Temperiermodul 12 nimmt zu temperierende Luft einerseits von einem schematisch angedeuteten Fahrzeuginnenraum 14 durch eine Leitung 16 auf und andererseits vom Außenraum durch eine Leitung 18. In einem Mischer 20 werden diese beiden Luftströme vermischt und zu einem Heizgerät 22 geleitet. Dies geschieht unter der Förderwirkung eines stromaufwärts des Heizgerätes vorgesehenen Gebläses 24. Es wird somit ein eine Wärmetauscheranordnung 26 des Heizgerätes 22 durchströmender Luftstrom erzeugt, der durch eine Leitung 28 angedeutet, in den Fahrzeuginnenraum 14 eintritt.

Zum Aufbau des Heizgeräts 22 an sich sei ausgeführt, dass dieses von herkömmlichem Aufbau sein kann und einen nur schematisch angedeuteten Heizbrenner 30 aufweisen kann, dem über eine Dosierpumpe 32 zu verbrennender Brennstoff zugeführt wird und über ein Verbrennungsluftgebläse 34 die zur Verbrennung mit dem zugeführten Brennstoff erforderliche Verbrennungsluft zugeführt wird. Der Heizbrenner 30 kann ein Zerstäuberbrenner oder ein Verdampferbrenner sein, wobei dem Heizbrenner 30 zum Zünden desselben ein Zündorgan 36, beispielsweise Glühzündstift, zugeordnet ist. Ferner kann diesem ein Flammfühler 38 zugeordnet sein, während der Wärmetauscheranordnung 26 ein Überhitzungsfühler 40 zugeordnet sein kann. Das Heizgerät 22 an sich steht zusammen mit der Dosierpumpe 32 und dem Verbrennungsluftgebläse 34 unter der Ansteuerung eines allgemein mit 42 bezeichneten Heizgeräts. Auch der in der Startphase des Heizgeräts 22 zu aktivierende Glühzündstift 36 steht unter der Ansteuerung des Ansteuergeräts 42. Neben den Ausgaben der bereits angesprochenen Sensoren 38, 40 empfängt das Ansteuergerät 32 ferner eine Ausgabe von einem Austrittstemperatursensor 44, welcher die Temperatur des Luftstroms erfasst, nachdem dieser die Wärmetauscheranordnung 26 durchströmt hat. Es ist selbtsverständlich, dass der Austrittstemperatursensor 44 auch stromaufwärts des Gebläses 24 angeordnet sein kann bzw. die Temperatur des Luftstroms stromaufwärts bezüglich dieses Gebläses 24 erfassen kann.

Ein weiteres Steuergerät 46 ist dem Gebläse 24 zugeordnet, was bedeutet, dass das Gebläse 24 durch Erzeugung entsprechender Ansteuerbefehle gemäß der Vorgabe des Ansteuergeräts 46 betrieben wird. Das Ansteuergerät 46, welches weiterhin auch den Mischer 20 zum Einstellen des Umluft/Frischluft-Verhältnisses ansteuern kann, empfängt verschiedene Eingangsgrößen. Dies ist zum einen eine Ausgabe eines Temperatursensors 48, der die Temperatur des in die Wärmetauscheranordnung 26 eintretenden Luftstroms erfasst. Ferner gibt ein Innenraumtemperatursensor 50 seine Ausgabe in die Ansteuervorrichtung 46 ein. Eine Startvorgabeanordnung 52, beispielsweise ein Bedienschalter, kann ein Signal erzeugen, welches dem Ansteuergerät 46 anzeigt, dass das Heizsystem 10 beispielsweise in einem Standheizungsmodus oder einem Zuheizmodus betrieben werden soll. Eine entsprechende Information kann auch durch eine programmierbare Zeitschaltuhr 54 generiert werden. Diese die Startphase des Heizbetriebs repräsentierende Information kann auch dem Steuergerät 42 zugeführt werden, entweder direkt von den Bereichen 52, 54, oder unter Vermittlung des Ansteuergeräts 46. Des Weiteren empfängt das Ansteuergerät 46 aus einer Fahrzeuginnenraumsolltemperaturvorgabeanordnung 56, beispielsweise einem Temperaturwahlschalter, Information darüber, auf welche Temperatur der Fahrzeuginnenraum erwärmt werden soll bzw. bei welcher Temperatur er gehalten werden soll. Eine Frischluft/Umluft-Verhältniswahlanordnung 58 ermöglicht die Vorgabe eines bestimmten Verhältnisses von Frischluft zu Umluft bzw. das Arbeiten beispielsweise im Frischluftmodus oder im Umluftmodus. Die Anordnungen 52, 56, 58 können beispielsweise manuell betätigbare Anordnungen sein, können jedoch auch implementiert sein in Form eines Ansteuersystembereichs, der entsprechende Vorgaben generiert und als zu verarbeitende Informationen für das Ansteuergerät 46 bereitstellt, so dass beispielsweise diese Anordnungen auch Teil des Ansteuergeräts 46 selbst sein können.

Es ist weiter ein Außentemperatursensor 60 vorgesehen, der die Tempratur in der Außenumgebung eines Fahrzeugs erfasst und sein Ausgangssignal zum Ansteuergerät 46 leitet.

Im Folgenden wird der Betrieb des in der Figur dargestellten erfindungsgemäßen Heizsystems 10 anhand des Standheizbetriebs detaillierter erläutert. Dazu sei beispielsweise angenommen, dass entweder durch die Zeitschaltuhr 54 oder die Anordnung 52 ein Einschaltbefehl generiert wird, d. h. ein Befehl, der signalisiert, dass der Heizbetrieb begonnen werden soll. Da davon auszugehen ist, dass der Standheizmodus nur bei vergleichsweise geringer Außentemperatur vorgenommen wird und dass beispielsweise durch Sonneneinstrahlung der Fahrzeuginnenraum bereits in gewisser Weise vorgewärmt ist und insofern die darin enthaltene Luft eine höhere Temperatur aufweisen wird, als die Außenluft, kann durch die Anordnung 58 vorgegeben werden, dass im Umluftmodus gearbeitet wird, was dadurch umgesetzt werden kann, dass durch den Mischer 20 entweder nur die vom Fahrzeuginnenraum 14 abgezogene Umluft eingeleitet wird oder diese Umluft unter Beimengung eines geringen Frischluftanteils von beispielsweise 15% genutzt wird und zur Wärmetauscheranordnung 26 geleitet wird. Ferner erzeugt die Anordnung 56 eine Fahrzeuginnenraumsolltemperatur, die beispielsweise bei +20°C liegen kann.

Die Information, dass der Standheizbetrieb begonnen werden soll, wird, wie vorangehend bereits geschildert, auch zum Heizgerät 42 geleitet, so dass dieses nunmehr durch Erregen der Dosierpumpe 32, des Verbrennungsluftgebläses 34 und des Glühzündstifts 36 das Heizgerät 22 in Betrieb setzt. Mit dem Inbetriebsetzen des Heizgeräts 22 oder beispielsweise dann, wenn durch den Flammfühler 38 erkannt wird, dass der Heizbrenner 30 gezündet hat und somit das Heizgerät 22 in einem Zustand ist, in welchem in der Wärmetauscheranordnung 26 Verbrennungswärme auf den dieses durchsetzenden Luftstrom übertragen werden kann, aktiviert das Steuergerät 46 das Gebläse 24, um eine Luftzirkulation bzw. Luftströmung zu generieren. Die Förderleistung des Gebläses 24 wird dabei im Wesentlichen bestimmt durch die Differenz zwischen der Fahrzeuginnenraumsolltemperatur, vorgegeben durch die Anordnung 56, und der Fahrzeuginnenraumtemperatur, erfasst durch die Sensoranordnung 50. Je größer diese Temperaturdifferenz ist, desto größer wird die Förderleistung des Gebläses 24 eingestellt, um sicherzustellen, dass eine relativ große in den Fahrzeuginnenraum 14 eingeleitete Menge erwärmter. Luft eine möglichst schnelle Erwärmung des Fahrzeuginnenraums 14 bewirken kann, d. h., ein möglichst schnelles Heranführen der durch die Sensoranordnung 50 erfassten Isttemperatur an die Fahrzeuginnenraumsolltemperatur.

Im Steuergerät 42 ist für die Solltemperatur des die Wärmetauscheranordnung 26 verlassenden Luftstroms ein Wert vorgegeben. Dieser z.B. fest und unveränderbar vorgegebene Wert ist so ausgewählt, dass die die Wärmetauscheranordnung 26 verlassende und in ein im Allgemeinen aus Kunststoffmaterial aufgebautes Rohrleitungssystem einströmende Luft nicht zu thermisch bedingten Verformungen verschiedener Kunststoffkomponenten führen kann. Es sei beispielsweise angenommen, dass diese Solltemperatur bei 65°C liegt. Angestrebt ist jedoch hier eine Temperatur im Bereich von bis zu 80°C. Das Heizgerät 42 vergleicht diese Solltemperatur mit der vermittels der Sensoranordnung 44 erfassten Isttemperatur des Luftstroms und verändert, je nach Vergleichsergebnis, die durch Verbrennung im Heizbrenner 30 freigesetzte Wärmeenergiemenge und infolgedessen die Heizleistung des Heizgeräts 22. Die zum Erreichen dieser fest vorgegebenen Solltemperatur erforderliche Heizleistung wird im Wesentlichen abhängen von der Eintrittstemperatur, mit welcher die Luft in die Wärmetauscheranordnung 26 eintritt, und von dem Luftmassenstrom, welcher die Wärmetauscheranordnung 26 durchsetzt. Je mehr Luft diese Wärmetauscheranordnung 26 durchsetzt, desto mehr Wärmeenergie muss vermittels des Heizbrenners 30 bereitgestellt werden, um am Austrittsbereich bzw. zur Einleitung in den Fahrzeuginnenraum 14 die gewünschte Solltemperatur beispielsweise im Bereich von 65°C zu erlangen. Daraus folgt aber, dass, obgleich das das Gebläse 24 ansteuernde Heizgerät 46 keinen direkten Einfluss auf den Betrieb des Heizgeräts 22 hat, da keine entsprechende Ansteuerverbindung besteht, die durch das Ansteuergerät 46 für das Gebläse 24 vorgegebene Förderleistung einen Einfluss auf die Temperatur der die Wärmetauscheranordnung 26 verlassenden Luft haben wird und insofern gemäß der Erfassung dieser Temperatur das Steuergerät 42 beispielsweise bei Erhöhung der Förderleistung des Gebläses 24 in entsprechender Weise die Heizleistung des Heizgeräts 22 bzw. des Brenners 30 desselben nachführen wird. Insofern besteht zwischen der Ansteuercharakteristik des Steuergeräts 46 und der Ansteuercharakteristik des Steuergeräts 42 für die beiden von diesen Steuergeräten betriebenen Systembereiche ein enger Zusammenhang, obgleich keines dieser Steuergeräte durch entsprechende Vorgabe von Ansteuergrößen eine Ansteuerung im anderen Systembereich vornimmt. Dies ermöglicht es, das Heizgerät 22 mit dem diesem zugeordneten Steuergerät 42 und selbstverständlich auch der Dosierpumpe 32 und dem Verbrennungsluftgebläse 34 als einen im Wesentlichen selbständig aufgebauten und auch autark arbeitenden Systembereich in ein Gesamtsystem einzugliedern. Ansteuerungstechnische Änderungen im Bereich des Steuergeräts 46 für das Gebläse 24 sind dadurch nicht erforderlich.

Es sei darauf hingewiesen, dass selbstverständlich zusätzlich zu den vorangehenden jeweils der Ansteuerung der verschiedenen Systembereiche zu Grunde liegenden Eingangsgrößen, jeweils umfassend Messgrößen einerseits und entweder fest vorgegebene oder variabel vorgebbare Sollwerte andererseits, in den verschiedenen Steuergeräten 42 bzw. 46 noch zusätzliche Informationen, wie z. B. die Temperatur der in die Wärmetauscheranordnung 26 eintretenden Luft, erfasst durch die Sensoranordnung 48, herangezogen werden können, ebenso wie weitere externe Parameter, wie Außenlufttemperatur, Außenluftdruck und dergleichen. Es ist selbstverständlich, dass das in der Figur dargestellte System noch weitere Bereiche, wie z. B. in Zuordnung zum Gebläse 24 eine Klimatisierungseinheit umfassen kann, die dann auch vom Steuergerät 46 angesteuert werden kann. Auch ist es selbstverständlich möglich, beispielsweise das Gebläse 24 stromaufwärts bezüglich der Wärmetauscheranordnung 26 anzuordnen.

Um mit dem vorangehend beschriebenen System beispielsweise im Standheizmodus oder aber auch im Zuheizmodus den Komfort für die nachfolgend ein Fahrzeug dann benutzenden Personen zu erhöhen, ist es die Zielsetzung, die in den Fahrzeuginnenraum 14 einzuleitende Luft mit einem größtmöglichen Anteil an Frischluft anzureichern, gleichwohl jedoch die gewünschten Temperaturen schnell bereitstellen zu können. Gemäß einem Aspekt der Erfindung kann hierzu vorgesehen sein, dass das Steuergerät 46 den Mischer 20 unter Berücksichtigung des Ausgangssignals des Außentemperatursensors 60 ansteuert, um das Außenluft/Umluft-Verhältnis so einzustellen, dass einerseits durch die nachfolgende Erwärmung dieses Gemisches die gewünschten Temperaturen im Fahrzeuginnenraum erlangt werden können, andererseits jedoch der Anteil an Umluft und somit Frischluft größtmöglich ist. Hier kann der Zusammenhang derart sein, dass das Steuergerät 46 den Mischer 20 zum Erhöhen des Anteils an Außenluft, also zum Vergrößern des Außenluft/Umluft-Verhältnisses ansteuert, wenn die Außentemperatur zunimmt, was durch eine entsprechende Veränderung des Ausgangssignals des Temperatursensors 60 erkennbar wird. D.h., bei niedrigeren Außentemperaturen wird der Anteil an zusätzlich beigemischter Außenluft geringer sein, als dies bei höheren Außentemperaturen der Fall ist. Dadurch lässt sich nicht nur ein größtmöglicher Außenluftanteil und somit auch Sauerstoffgehalt in der dem Fahrzeuginneraum 14 zuzuführenden Luft erlangen. Es kann auch dafür gesorgt werden, dass in der Nachtruhephase die Gefahr des Beschlagens der Fensterscheiben mit Feuchtigkeit verringert wird.

Die Ansteuerung des Mischers 20 zum Einstellen eines definierten Verhältnisses kann so erfolgen, dass über die Leitungen 1 6 und 18 gleichzeitig im gewünschten Mischungeverhältnis Luftströme zugeführt und über das Gebläse 24 zur Wärmetauscheranordnung 26 geleitet werden können. Es ist jedoch auch möglich, taktweise zu arbeiten, d.h. in einer Phase Luft von der Leitung 16 zur Wärmetauscheranordnung 26 zu führen und einer anderen darauf folgenden Phase Luft von der Leitung 18 zur Wärmetauscheranordnung zu führen, so dass eine über die Zeit hinweg vorgesehene Mittelung ein entsprechendes Mischungsverhältnis ergibt.

Bei einer weiteren Möglichkeit zur Erhöhung des Komforts kann die Ansteuerung des Mischers 20 vermittels des Steuergeräts 46 unter Berücksichtigung der Ausgabe des Innenraumtemperatursensors 50 erfolgen. Ist die Innenraumtemperatur vergleichsweise hoch, so kann der Anteil an beizumischender Außenluft bzw. Frischluft vergrößert werden, da dann die Gefahr, dass auch bei vergleichsweise niedrigen Außentemperaturen die gewünschten Innenraumtemperaturen nicht oder nicht in der gewünschten Zeit erreicht werden können, praktisch nicht vorhanden ist. Auch hier ist es möglich, eine kontinuierliche Durchmischung der beiden Luftströme der Leitungen 16 und 18 vorzusehen, oder eine getakte bzw. intervallweise Einleitung von Umluft und Außenluft.

Eine weitere Möglichkeit, den Anteil der beizumischenden Außenluft so groß als möglich zu gestalten, besteht darin, die Abweichung der Innenraumtemperatur von der Innenraumsolltemperatur der Ansteuerung des Mischers 20 zu Grunde zu legen. Ist diese Abweichung relativ gering, d.h. ist die Innenraumtemperatur nahe bei der Solltemperatur, so kann der Anteil an beizumengender bzw. einzuspeisender Frischluft vergrößert werden, während bei vergleichsweise großer Abweichung der Innenraumtemperatur von der Innenraumsolltemperatur, insbesondere dann, wenn die Innenraumtemperatur noch unter der Innenraumsolltemperatur liegt, der beizumischende Frischtluftanteil verringert wird, um die gewünschte Temperatur im Fahrzeuginnenraum 14 so schnell als möglich zu erreichen.

Auch hier ist selbstverständlich wieder der vorangehend angespochene getakte Betrieb möglich.

Mit den vorangehend beschriebenen Vorgehensweisen bei der Ansteuerung des Mischers 20 zum Einstellen des Verhältnisses der Außenluftmenge zur Umluftmenge wird es möglich, dieses Verhältnis in einem großen Bereich zu variieren, beispielsweise bei einem Wert von 0, also reinem Umtuftbe trieb, bis zu einem Zustand, in dem praktisch nur Außenluft bzw. Umluft eingespeist wird, zumindest für kürzere Phasen, wenn die Fahrzeuginnenraumtemperatur 14 im gewünschten Bereich liegt. Die vorangehend beschriebenen Vorgehensweisen sind insbesondere am Beginn der Heizphase vorteilhaft, können jedoch auch während des länger andauernden Betriebs aktiviert sein bzw. bleiben. Selbstverständlich ist es weiterhin möglich, dass dann beispielsweise durch Fahrervorgabe unter Verwendung der Frischluft/Umluft-Verhältniswahlanordnung 58 eine Änderung dieses an sich durch das Steuergerät 46 vorgegebenen Verhältnisses erzwungen wird.

## Patentansprüche

1. Heizsystem für ein Fahrzeug, umfassend:
- ein Heizluftgebläse (24) zur Erzeugung eines in einen Fahrzeuginnenraum einzuleitenden Heizluftstroms,
- ein Heizgerät (22) mit einer Wärmetauscheranordnung (26) zur Erwärmung des durch das Heizluftgebläse (24) geförderten Heizluftstroms,
- eine Mischeranordnung (20) zur Einstellung eines Außenluft/Umluft-Verhältnisses der der Wärmetauscheranordnung (26) zuzuführenden Luft,
- eine Außentemperatursensoranordnung (60) zur Erzeugung einer mit einer Außentemperatur in Zusammenhang stehenden Ausgabe,
- eine Ansteueranordnung (42, 46) zur Ansteuerung der Mischeranordnung (20) zur Einstellung des Außenluft/Umluft-Verhältnisses beruhend auf einer Ausgabe der Außentemperatursensoranordnung (60) **dadurch gekennzeichnet, dass** eine Heizluftstromtemperatursensoranordnung (44) vorgesehen ist zur Erzeugung einer im Zusammenhang mit der Austrittstemperatur des durch das Heizgerät (22) erwärmten Heizluftstroms stehenden Ausgabe, wobei die Ansteueranordnung (42, 46) dazu ausgebildet ist, die Heizleistung des Heizdie Heizleistung des Heizgeräts (22) beruhend auf der Ausgabe der Heizluftstromtemperatursensoranordnung (44) einzustellen.

2. Heizsystem nach Anspruch 1,
**dadurch gekennzeichnet, dass** die Ansteueranordnung (42, 46) die Mischeranordnung (20) derart ansteuert, dass je geringer die Außentemperatur, desto geringer das Außenluft/Umluft-Verhältnis ist.

3. Heizsystem für ein Fahrzeug, umfassend:
- ein Heizluftgebläse (24) zur Erzeugung eines in einen Fahrzeuginnenraum einzuleitenden Heizluftstroms,
- ein Heizgerät (22) mit einer Wärmetauscheranordnung (26) zur Erwärmung des durch das Heizluftgebläse (24) geförderten Heizluftstroms,
- eine Mischeranordnung (20) zur Einstellung eines Außenluft/Umluft-Verhältnisses der der Wärmetauscheranordnung (26) zuzuführenden Luft,
- eine Fahrzeuginnenraumtemperatursensoranordnung (50) zur Erzeugung einer im Zusammenhang mit der Fahrzeuginnenraumtemperatur stehenden Ausgabe,
- eine Ansteueranordnung (42, 46) zur Ansteuerung der Mischeranordnung (20) zur Einstellung des Außenluft/Umluft-Verhältnisses beruhend auf der Ausgabe der Fahrzeuginnenraumtemperatursensoranordnung (50) **dadurch gekennzeichnet, dass** eine Heizluftstromtemperatursensoranordnung (44) vorgesehen ist zur Erzeugung einer im Zusammenhang mit der Austrittstemperatur des durch das Heizgerät (22) erwärmten Heizluftstroms stehenden Ausgabe, wobei die Ansteueranordnung (42, 46) dazu ausgebildet ist,die Heizleistung des Heizgeräts (22) beruhend auf der Ausgabe der Heizluftstromtemperatursensoranordnung (44) einzustellen.

4. Heizsystem nach Anspruch 3,
**dadurch gekennzeichnet, dass** die Ansteueranordnung (42, 46) die Mischeranordnung (20) derart ansteuert, dass je geringer die Fahrzeuginnenraumtemperatur, desto geringer das Außenluft/Umluft-Verhältnis ist.

5. Heizsystem für ein Fahrzeug, umfassend:
- ein Heizluftgebläse (24) zur Erzeugung eines in einen Fahrzeuginnenraum einzuleitenden Heizluftstroms,
- ein Heizgerät (22) mit einer Wärmetauscheranordnung (26) zur Erwärmung des durch das Heizluftgebläse (24) geförderten Heizluftstroms,
- eine Mischeranordnung (20) zur Einstellung eines Außenluft/Umluft-Verhältnisses der der Wärmetauscheranordnung (26) zuzuführenden Luft,
- eine Fahrzeuginnenraumtemperatursensoranordnung (50) zur Erzeugung einer im Zusammenhang mit der Fahrzeuginnenraumtemperatur stehenden Ausgabe,
- eine Fahrzeuginnenraumsolltemperaturvorgabeanordnung (56),
- eine Ansteueranordnung (42, 46) zur Ansteuerung der Mischeranordnung (20) zur Einstellung des Außenluft/Umluft-Verhältnisses beruhend auf einer Abweichung der Fahrzeuginnenraumtemperatur von der Innenraumsolltemperatur, **dadurch gekennzeichnet, dass** eine Heizluftstromtemperatursensoranordnung (44) vorgesehen ist zur Erzeugung einer im Zusammenhang mit der Austrittstemperatur des durch das Heizgerät (22) erwärmten Heizluftstroms stehenden Ausgabe, wobei die Ansteueranordnung (42, 46) dazu ausgebildet ist, die Heizleistung des Heizgeräts (22) beruhend auf der Ausgabe der Heizluftstromtemperatursensoranordnung (44) einzustellen.

6. Heizsystem nach einem der Ansprüche 1 bis 5,
**dadurch gekennzeichnet, dass** die Ansteueranordnung (42, 46) dazu ausgebildet ist, die Förderleistung des Heizluftgebläses (24) beruhend auf einer Ausgabe einer Fahrzeuginnenraumtemperatursensoranordnung (50) und der durch eine Fahrzeuginnenraumsolltemperaturvorgabeanordnung (56) vorgegebenen Innenraumsolltemperatur einzustellen.

7. Heizsystem nach einem der Ansprüche 1 bis 6,
**dadurch gekennzeichnet, dass** die Ansteueranordnung (42, 46) ein erstes Ansteuergerät (46) zur Ansteuerung des Heizluftgebläses (24) und der Mischeranordnung (20) umfasst sowie ein zweites Ansteuergerät (42) zur Ansteuerung des Heizgeräts (22) umfasst, wobei das erste Ansteuergerät (46) die Ausgabe einer Außenraumtemperatursensoranordnung (60) oder/und einer Fahrzeuginnenraumtemperatursensoranordnung (50) oder/und einer Fahrzeuginnenraumsolltemperaturvorgabeanordnung (56) als Eingangsgrößen aufweist.

## Claims

1. A heating system for a vehicle, the heating system comprising:
- a heating air blower (24) for generating a heating air stream to be introduced into the interior space of the vehicle;
- a heater (22) with a heat exchanger arrangement (26) for heating the heating air stream being delivered by said heating air blower (24);
- a mixing arrangement (20) for setting an outside air/ambient air ratio of the air to be fed to said heat exchanger arrangement (26);
- an outside temperature sensor arrangement (60) for generating an output linked with an outside temperature; and
- an actuating arrangement (42, 46) for actuating said mixing arrangement (20) to set an outside air/ambient air ratio on the basis of an output of said outside temperature sensor arrangement (60),
**characterized in that** a heating air stream temperature sensor arrangement (44) is provided for generating an output linked with the temperature at which the heating air stream heated by said heater (22) is discharged, said actuating arrangement (42, 46) being designed to set the heat output of said heater (22) on the basis of the output of said heating air stream temperature sensor arrangement (44).

2. A heating system in accordance with claim 1,
**characterized in that** said actuating device (42, 46) actuates said mixing arrangement (20) such that the outside air/ambient air ratio is tower in case of a lower outside temperature.

3. A heating system for a vehicle, the heating system comprising:
- a heating air blower (24) for generating a heating air stream to be introduced into the interior space of a vehicle;
- a heater (22) with a heat exchanger arrangement (26) for heating the heating air stream being delivered by said heating air blower (24);
- a mixing arrangement (20) for setting an outside air/ambient air ratio of the air to be fed into said heat exchanger arrangement (26);
- a vehicle interior space temperature sensor arrangement (50) for generating an output linked with the temperature of the interior space of the vehicle; and
- an actuating arrangement (42, 46) for actuating said mixing arrangement (20) for setting the outside air/ambient air ratio on the basis of the output of said vehicle interior space temperature sensor arrangement (50),
**characterized in that** a heating air stream temperature sensor arrangement (44) is provided for generating an output linked with the temperature at which the heating air stream heated by said heater (22) is discharged, said actuating arrangement (42, 46) being designed to set the heat output of said heater (22) on the basis of the output of said heating air stream temperature sensor arrangement (44).

4. A heating system in accordance with claim 3,
**characterized in that** said actuating arrangement (42, 46) actuates said mixing arrangement (20) such that the outside air/ambient air ratio is lower in case of a lower temperature of the interior space of the vehicle.

5. A heating system for a vehicle, the heating system comprising:
- a heating air blower (24) for generating a heating air stream to be introduced into the interior space of a vehicle;
- a heater (22) with a heat exchanger arrangement (26) for heating the heating air stream being delivered by said heating air blower (24);
- a mixing arrangement (20) for setting an outside air/ambient air ratio of the air to be fed into said heat exchanger arrangement (26);
- a vehicle interior space temperature sensor arrangement (50) for generating an output linked with the temperature of the interior space of the vehicle;
- a vehicle interior space desired temperature presetting arrangement (56); and
- an actuating device (42, 46) for actuating said mixing arrangement (20) for setting the outside air/ambient air ratio on the basis of a deviation of the temperature of the interior space of the vehicle from the interior space desired temperature,
**characterized in that** a heating air stream temperature sensor arrangement (44) is provided for generating an output linked with the temperature at which the heating air stream heated by said heater (22) is discharged, said actuating arrangement (42, 46) being designed to set the heat output of said heater (22) on the basis of the output of said heating air stream temperature sensor arrangement (44).

6. A heating system according to one of claims 1 to 5,
**characterized in that** said actuating arrangement (42, 46) is designed to set the delivery capacity of said heating air blower (24) on the basis of an output of a vehicle interior space temperature sensor arrangement (50) and the interior space desired temperature preset by a vehicle interior space desired temperature presetting arrangement (56).

7. A heating system in accordance with one of claims 1 to 6,
**characterized in that** said actuating arrangement (42, 46) comprises a first actuating device (46) for actuating said heating air blower (24) and said mixing arrangement (20) as well as a second actuating device (42) for actuating said heater (22), wherein said first actuating device (46) has the output of an outside temperature sensor arrangement (60) and/or of a vehicle interior space temperature sensor arrangement (50) and/or of a vehicle interior space desired temperature presetting arrangement (56) as the input variables.

## Revendications

1. Système de chauffage pour un véhicule, comprenant :
- une soufflerie (24) à air chaud, pour engendrer un courant d'air chaud devant être introduit dans un habitacle du véhicule,
- un appareil de chauffage (22) équipé d'un ensemble d'échange thermique (26), pour réchauffer le courant d'air chaud refoulé par la soufflerie (24) à air chaud,
- un ensemble mélangeur (20) pour régler un rapport air extérieur/air environnant de l'air devant être délivré à l'ensemble d'échange thermique (26),
- un ensemble (60) détecteur de température extérieure, pour engendrer une indication de sortie en relation avec une température extérieure,
- un ensemble d'activation (42, 46) pour activer l'ensemble mélangeur (20) en vue du réglage du rapport air extérieur/air environnant, sur la base d'une indication de sortie de l'ensemble (60) détecteur de température extérieure,
**caractérisé par le fait qu'**un ensemble (44) de détection de température du courant d'air chaud est prévu pour générer une indication de sortie en relation avec la température de sortie du courant d'air chaud réchauffé par l'appareil de chauffage (22), l'ensemble d'activation (42, 46) étant réalisé en vue de régler la puissance de chauffage dudit appareil de chauffage (22) sur la base de l'indication de sortie dudit ensemble (44) de détection de température du courant d'air chaud.

2. Système de chauffage selon la revendication 1,
**caractérisé par le fait que** l'ensemble d'activation (42, 46) active l'ensemble mélangeur (20) de façon telle que le rapport air extérieur/air environnant soit d'autant plus faible que la température extérieure est modeste.

3. Système de chauffage pour un véhicule, comprenant :
- une soufflerie (24) à air chaud, pour engendrer un courant d'air chaud devant être introduit dans un habitacle du véhicule,
- un appareil de chauffage (22) équipé d'un ensemble d'échange thermique (26), pour réchauffer le courant d'air chaud refoulé par la soufflerie (24) à air chaud,
- un ensemble mélangeur (20) pour régler un rapport air extérieur/air environnant de l'air devant être délivré à l'ensemble d'échange thermique (26),
- un ensemble (50) détecteur de température de l'habitacle du véhicule, pour générer une indication de sortie en relation avec la température de l'habitacle du véhicule,
- un ensemble d'activation (42, 46) pour activer l'ensemble mélangeur (20) en vue du réglage du rapport air extérieur/air environnant, sur la base de l'indication de sortie de l'ensemble (50) détecteur de température de l'habitacle du véhicule,
**caractérisé par le fait qu'**un ensemble (44) de détection de température du courant d'air chaud est prévu pour générer une indication de sortie en relation avec la température de sortie du courant d'air chaud réchauffé par l'appareil de chauffage (22), l'ensemble d'activation (42, 46) étant réalisé en vue de régler la puissance de chauffage dudit appareil de chauffage (22) sur là base de l'indication de sortie dudit ensemble (44) de détection de température du courant d'air chaud.

4. Système de chauffage selon la revendication 3,
**caractérisé par le fait que** l'ensemble d'activation (42, 46) active l'ensemble mélangeur (20) de façon telle que le rapport air extérieur/air environnant soit d'autant plus faible que la température de l'habitacle du véhicule est modeste.

5. Système de chauffage-pour un véhicule, comprenant :
- une soufflerie (24) à air chaud, pour engendrer un courant d'air chaud devant être introduit dans un habitacle du véhicule,
- un appareil de chauffage (22) équipé d'un ensemble d'échange thermique (26), pour réchauffer le courant d'air chaud refoulé par la soufflerie (24) à air chaud,
- un ensemble mélangeur (20) pour régler un rapport air extérieur/air environnant de l'air devant être délivré à l'ensemble d'échange thermique (26),
- un ensemble (50) détecteur de température de l'habitacle du véhicule, pour générer une indication de sortie en relation avec la température de l'habitacle du véhicule,
- un ensemble (56) de prédétermination de la température de consigne de l'habitacle du véhicule,
- un ensemble d'activation (42, 46) pour activer l'ensemble mélangeur (20) en vue du réglage du rapport air extérieur/air environnant, sur la base d'un écart de la température de l'habitacle du véhicule vis-à-vis de la température de consigne dudit habitacle,
**caractérisé par le fait qu'**un ensemble (44) de détection de température du courant d'air chaud est prévu pour générer une indication de sortie en relation avec la température de sortie du courant d'air chaud réchauffé par l'appareil de chauffage (22), l'ensemble d'activation (42, 46) étant réalisé en vue de régler la puissance de chauffage dudit appareil de chauffage (22) sur la base de l'indication de sortie dudit ensemble (44) de détection de température du courant d'air chaud.

6. Système de chauffage selon l'une des revendications 1 à 5,
**caractérisé par le fait que** l'ensemble d'activation (42, 46) est réalisé pour régler la puissance de refoulement de la soufflerie (24) à air chaud sur la base d'une indication de sortie d'un ensemble (50) détecteur de température de l'habitacle du véhicule, et de la température de consigne dudit habitacle, préétablie par un ensemble (56) de prédétermination de la température de consigne de l'habitacle du véhicule.

7. Système de chauffage selon l'une des revendications 1 à 6,
**caractérisé par le fait que** l'ensemble d'activation (42, 46) comprend un premier appareil d'activation (46) pour activer la soufflerie (24) à air chaud et l'ensemble mélangeur (20), ainsi qu'un second appareil d'activation (42) pour activer l'appareil de chauffage (22), ledit premier appareil d'activation (46) présentant, en tant que grandeurs d'entrée, l'indication de sortie d'un ensemble (60) détecteur de température extérieure et/ou d'un ensemble (50) détecteur de température de l'habitacle du véhicule et/ou d'un ensemble (56) de prédétermination de la température de consigne de l'habitacle du véhicule.
